# EUROPÄISCHE PATENTSCHRIFT

(11) **EP 1 525 395 B1**
(45) Veröffentlichungstag und Bekanntmachung des Hinweises auf die Patenterteilung: **05.06.2019**
(21) Anmeldenummer: 03784169.9
(22) Anmeldetag: 04.08.2003
(51) Int. Cl.: F03D 1/06

(54) **VERFAHREN ZUM HERSTELLEN EINES ROTORBLATTES, ROTORBLATT UND WINDENERGIEANLAGE**
METHOD FOR PRODUCING A ROTOR BLADE, A CORRESPONDING ROTOR BLADE AND A WIND POWER PLANT
PROCEDE DE PRODUCTION D'UNE PALE DE ROTOR, PALE DE ROTOR ET EOLIENNE CORRESPONDANTES

(30) Priorität: 02.08.2002 DE 10235496
(43) Veröffentlichungstag der Anmeldung: 27.04.2005
(73) Patentinhaber: GENERAL ELECTRIC COMPANY, Schenectady, NY 12345 (US)
(72) Erfinder: ARELT, Rainer, 48499 Salzbergen (DE)
(74) Vertreter: Zimmermann & Partner Patentanwälte mbB
(86) Internationale Anmeldenummer: PCT/EP2003/008618
(87) Internationale Veröffentlichungsnummer: WO 2004/015265

(56) Entgegenhaltungen:
- WO-A-95/20104
- US-A- 4 295 790
- US-A- 4 389 162
- US-A- 4 643 646
- US-A- 5 462 408
- US-A- 5 547 629

## Beschreibung

Die Erfindung betrifft ein Verfahren zum Herstellen eines Rotorblattes für den Rotor einer Windenergieanlage mit mindestens zwei in Längsrichtung des Rotorblattes hintereinander angeordneten und miteinander verklebten Rotorblattelementen, ein mit diesem Verfahren hergestelltes Rotorblatt und eine ein derartiges Rotorblatt aufweisende Windenergieanlage.

Große Windenergieanlagen weisen eine Nennleistung von mehreren Megawatt auf. Zum Erhalt dieser hohen Leistungen werden Rotoren mit Durchmessern von 100 m und mehr eingesetzt. Entsprechend können die Rotorblätter zur Herstellung dieser Rotoren Längen von 50 m oder mehr aufweisen. Diese Rotorblätter werden üblicherweise in Form von Hohlprofilen hergestellt, in denen ein oder mehrere Biegemomente aufnehmende Holme integriert sind. Sowohl die Herstellung als auch der Transport derartig großer Bauelemente bereitet erhebliche Probleme. Aus diesem Grund wurden bereits Rotorblätter der eingangs beschriebenen Art vorgeschlagen, deren Rotorblattelemente einzeln zum Aufstellungsort der Windenergieanlage transportiert und erst dort zusammengefügt werden können. Zu diesem Zweck wurden bereits Verfahren der eingangs beschriebenen Art vorgeschlagen. Mit diesen Verfahren kann eine Verbindung der Rotorblattelemente ohne Beeinflussung der aerodynamischen Eigenschaften des Rotorblattes und auch ohne Hinzufügung von Zusatzgewichten zum Rotorblatt erreicht werden. Allerdings hat es sich gezeigt, daß diese Rotorblätter den erheblichen Wechsellasten während des Betriebs einer Windenergieanlage nicht standhalten. Im Hinblick auf diese Probleme wird in der WO 01148378 A1 der Einsatz von Rotorblättern vorgeschlagen, bei denen die einzelnen Rotorblattelemente mit Hilfe von eine Teilungsfuge zwischen diesen Elementen überbrückenden Laschen verbunden sind, wobei diese Laschen im Bereich der einander zugewandten Enden der Rotorblattelemente festgelegte Bolzen umlaufen. Durch eine besondere Formgebung dieser Bolzen wird bei dem in der WO 01/48378 A1 vorgeschlagenen Rotorblatt eine Zugkraft-Vorspannung im Bereich der Teilungsfuge zwischen den einzelnen Rotorblattelementen erzeugt. Durch diese Zugkraft-Vorspannung wird erreicht, daß trotz der Wechsellast-Beanspruchung im Verlauf einer Umdrehung des Rotors einer Windenergieanlage nur Zugkräfte im Bereich der Trennungsfuge erzeugt werden, wobei lediglich deren Größe variiert.

Allerdings hat es sich beim Einsatz der in der WO 01/48378 A1 beschriebenen Rotorblättern gezeigt, daß es beim Dauerbetrieb einer Windenergieanlage zu Rißbildungen und anderen Beschädigungen im Bereich der Teilungsfuge zwischen den einzelnen Rotorblattelementen kommt. Die US 4,389,162 beschreibtein Rotorblatt, das aus unehre en Teilen zusammer gesetit ist. Die US 4,295,790 beschreibteine Rotorblatt struktur fü eine Windkraftanlage. Die US 4.643.646 beschriet ein Rotorblatt mit modularen Abschnitten.

Angesichts dieser Probleme im Stand der Technik liegt der Erfindung die Aufgabe zugrunde, ein Verfahren zum Herstellen von Rotorblättern für Windenergieanlagen bereitzustellen, mit denen für einen Dauerbetrieb einer Windenergieanlage geeignete Rotorblätter mit vorgegebenen aerodynamischen Eigenschaften hergestellt werden können, mit diesem Verfahren hergestellte Rotorblätter anzugeben sowie unter Verwendung derartiger Rotorblätter hergestellte Windenergieanlagen zur Verfügung zu stellen.

In verfahrensmäßiger Hinsicht wird diese Aufgabe durch eine Weiterbildung der bekannten Verfahren zum Herstellen von Rotorblättern für Windenergieanlagen, bei denen mindestens zwei Rotorblattelemente in Längsrichtung des Rotorblattes hintereinander angeordnet und über mindestens ein, vorzugsweise zwei, eine Trennfuge zwischen den Rotorblattelementen überbrückende Verbindungselemente miteinander verklebt werden, gelöst, die im wesentlichen dadurch gekennzeichnet ist, daß mindestens ein Verbindungselement unter Bildung eines Hohlraums zwischen einer äußeren Begrenzungsfläche mindestens eines der Rotorblattelemente und zumindest einem Fixierungssegment der inneren Begrenzungsfläche dieses Verbindungselementes mit den Rotorblattelementen ausgerichtet und dann der Hohlraum mit einem Klebstoff geflutet wird.

Diese Erfindung geht auf die Erkenntnis zurück, daß die beim Einsatz der aus der WO 01/48378 A1 Rotorblätter beobachteten Beschädigungen in erster Linie auf die zur Herstellung einer formschlüssigen Verbindung benötigten mechanischen Verbindungselemente bzw. Bolzen zurückzuführen sind, über die während des Betriebs der Windenergieanlage auftretende Kräfte nahezu punktförmig konzentriert in die Struktur des Rotorblattes eingeleitet werden und hohe Spannungsspitzen erzeugen, welche zu den beobachteten Beschädigungen führen, während bei den herkömmlichen miteinander verklebte Rotorblattelemente aufweisenden Rotorblättern eine mangelhafte Festigkeit der Klebeverbindung dadurch hervorgerufen wird, daß zur Herstellung der Klebeverbindung zunächst ein Klebstoff auf die Klebeflächen aufgetragen und dann das Verbindungselement auf diese Klebeflächen aufgesetzt und ausgerichtet wird. Durch diesen Ausrichtungsvorgang können lokale Lufteinschlüsse bzw. Dichteschwankungen der Klebstoffverteilung hervorgerufen werden, welche zu der beobachteten mangelhaften Festigkeit der Klebeverbindung führen. Bei den erfindungsgemäßen Verfahren werden diese Mängel dadurch beseitigt, daß das Verbindungselement zunächst mit den Rotorblattelementen ausgerichtet und erst danach der zwischen Verbindungselement und Rotorblattelementen gebildete Hohlraum mit dem Klebstoff geflutet wird, so daß es nicht mehr zu einer nachträglichen Veränderung der Klebstoffverteilung durch den Ausrichtungsvorgang kommen kann. Dabei können die Rotorblattelemente vor, während und/oder nach dem Klebevorgang mit einem geeigneten Ausrichtgeschirr in der gewünschten Position gehalten werden.

Im übrigen kann bei der erfindungsgemäß vorgeschlagenen Klebeverbindung die Krafteinleitung über großflächige Rotorblattsegmente erfolgen, um so die Bildung von Spannungsspitzen während des Betriebs der Windenergieanlage zu vermeiden.

Zum Erhalt einer die gewünschten Festigkeitseigenschaften aufweisenden Verbindung ohne Beeinflussung der aerodynamischen Eigenschaften des Rotorblattes hat es sich als besonders zweckmäßig erwiesen, wenn die Ausrichtung des Verbindungselementes vor Fluten des Hohlraums durch Verkleben eines das Fixierungssegment der inneren Begrenzungsfläche des Verbindungselementes zumindest teilweise umlaufenden Arretierungsrandes der inneren Begrenzungsfläche des Verbindungselementes mit einer äußeren Begrenzungsfläche mindestens eines der Rotorblattelemente arretiert wird. Auf diese Weise kann eine Ausrichtung ohne Einsatz mechanischer Arretierungselemente erreicht werden, um so das Risiko der Ausbildung lokaler Spannungsspitzen weiter zu reduzieren. Im Rahmen der Arretierung wird zweckmäßigerweise ein eingedicktes Epoxidharz und/oder Polyesterharz oder dgl. auf den Arretierungsrand und/oder der dem Arretierungsrand entsprechenden äußeren Begrenzungsfläche des Rotorblattelementes ohne Lufteinschlüsse gleichmäßig verteilt. Dabei kann die gleichmäßige Verteilung dadurch kontrolliert werden, daß eine größere Menge an Harz als eigentlich für die Klebedicke benötigt aufgetragen wird und die Verwendung einer ausreichenden Kleberdicke dadurch überprüft wird, daß an allen Stellen des Arretierungsrandes ein Herausdrücken des Epoxidharzes beobachtet wird. Neben der Arretierung des Verbindungselementes wird durch Verkleben des Verbindungselementes im Bereich des Arretierungsrandes auch noch eine Abdichtung des anschließend mit dem Klebstoff zu flutenden Hohlraums erreicht. Dann kann das gleichmäßige Fluten des Hohlraums mit dem Klebstoff zur Vermeidung von Lufteinschlüssen in den Hohlraum dadurch gefördert werden, daß zum Fluten ein Unterdruck in dem Hohlraum erzeugt wird, mit dem der Klebstoff in den Hohlraum gesaugt wird und/oder der Klebstoff mit Überdruck in den Hohlraum gepumpt wird.

Zweckmäßigerweise wird dabei so vorgegangen, daß das Rotorblatt nach dem Aushärten der ersten Verklebung im Bereich des Arretierungsrandes senkrecht gestellt und der zwischen Verbindungselement und Rotorblattelement gebildete Hohlraum anschließend mit Harz geflutet wird. Der Klebstoff wird dann mit Überdruck in den Hohlraum getrieben, wobei die Ausbildung von Lufteinschlüssen dadurch verhindert wird, daß an der Austrittstelle ein Vakuum angelegt wird, um die Luft aus dem Hohlraum zu saugen. Mit den erfindungsgemäßen Verfahren können besonders gute Ergebnisse erzielt werden, wenn der Hohlraum mit einem Klebstoff mit einer dynamischen Viskosität η im Bereich von etwa 130 - 230 Mpas, vorzugsweise etwa 150 - 210 Mpas, besonders bevorzugt etwa 170 - 190 Mpas, insbesondere etwa 180 Mpas und/oder einer kinematischen Viskosität v = η/ρ im Bereich von etwa 1,2 - 2 x 10⁵ m²/s, vorzugsweise etwa 1,4 - 1,8 x 10⁵ m²/s, insbesondere etwa 1,6 x 10⁵ m²/s geflutet wird. Zweckmäßigerweise wird dabei flüssiges Epoxidharz eingesetzt. Nach dem Fluten kann der Klebstoff bei Raumtemperatur und/oder für einen Zeitraum von 6 - 10 Std. bei einer Temperatur von etwa 70 ° C ausgehärtet bzw. getempert werden.

Eine besonders zuverlässige Füllung des Hohlraums kann erreicht werden, wenn die Zufuhr des Harzes an der ausgehend von der äußeren Begrenzungsfläche des Rotorblattes betrachtet tiefsten Stelle des Hohlraums erfolgt und/oder der Unterdruck an der höchstgelegenen Stelle des Hohlraums erzeugt wird. Die Einhaltung der Abmessungen des Hohlraums kann auch nach Erzeugung des Unterdrucks durch Benutzung geeigneter Abstandhalterelemente, wie etwa geschliffener Distanzklötzchen aus ausgehärtetem Harz sichergestellt werden. Das erfindungsgemäße Verfahren wird mit besonderem Vorteil zur Verbindung im Bereich der zur Aufnahme von Biegemomenten in die Schalen integrierten Gurte eingesetzt, da es hier besonders auf die Einhaltung exakter Klebstoffdicken ankommt und eine optische Überprüfung der vollständigen Verklebung nicht möglich ist.

Im übrigen können Rotorblätter im Rahmen der Erfindung ohne Zusatzmassen im Vergleich zu einstückig ausgeführten Rotorblättern hergestellt werden. Ferner ermöglicht die erfindungsgemäße Klebeverbindung der Rotorblattelemente eine Zusammenfügung dieser Elemente ohne Ausbildung übermäßiger Steifigkeitssprünge in den Rotorblättern, wodurch die Dauerhaftigkeit der Verbindung während des Betriebs der Windenergieanlage weiter gefördert wird. Schließlich wird durch die erfindungsgemäße Ausführung der Verbindung auch dem Umstand Rechnung getragen, daß die Kraftübertragung in Faserverbundwerkstoffen, welche üblicherweise zur Herstellung von Rotorblättern von Windenergieanlagen eingesetzt werden, so großflächig wie möglich sein müssen.

Grundsätzlich ist im Rahmen der Erfindung auch daran gedacht, eines der Rotorblattelemente mit einem in Längsrichtung aus einer Stirnfläche davon herausragenden Kragen auszustatten und das andere Rotorblattelement an seinem diesem Kragen zugewandten Ende mit einer entsprechend reduzierten Querschnittsfläche auszuführen, so daß dieses andere Rotorblattelement unter den Kragen geschoben und anschließend eine Verklebung zwischen den Rotorblattelementen bewirkt werden kann. Als herstellungstechnisch besonders günstig hat es sich jedoch erwiesen, wenn mindestens ein, vorzugsweise mindestens zwei eine Trennfuge zwischen den Rotorblattelementen überbrückende Verbindungselemente mit mindestens zwei Klebeflächensegmenten vorgesehen sind, wobei jedes der Klebeflächensegmente mit einem der Rotorblattelemente großflächig verklebt ist. Dabei können die Verbindungselemente die Längsachse des Rotorblattes im Bereich der Trennfuge zumindest teilweise umlaufen. Bei dieser Art der Verbindung können die Rotorblattelemente unter Verwendung der üblichen auch zur Herstellung einstückiger Rotorblätter benutzten Formen hergestellt werden, in dem Trennfolien in diese Form eingelegt werden, welche dafür sorgen, daß die einzelnen Rotorblattelemente beim Entformen des Rotorblattes zerstörungsfrei voneinander getrennt werden können.

Bei einer besonders bevorzugten Ausführungsform der Erfindung ist das mindestens eine Verbindungselement zumindest teilweise in einer in den äußeren Begrenzungsflächen der Rotorblattelemente im Bereich der Trennfuge gebildeten Ausnehmung aufgenommen. Dabei kann das Verbindungselement einen dem Aufbau daran angrenzender Bereiche der Rotorblattelemente entsprechenden, vorzugsweise laminatförmigen Aufbau aufweisen, um im Bereich der Trennfuge nach dem Verkleben insgesamt die erforderlichen Materialdicken an jeder Stelle des Verbindungsbereiches zu erreichen.

Zur Herstellung einer besonders dauerhaften Verbindung ist es besonders vorteilhaft, wenn die in den äußeren Begrenzungsflächen der Rotorblattelemente im Bereich der Trennfuge gebildete Ausnehmung die Längsachse des Rotorblattes vollständig umläuft. In diese Ausnehmung können dann zwei oder mehr Verbindungselemente zum Herstellen der gewünschten Verbindung eingesetzt werden. Im Hinblick auf den Erhalt der gewünschten Festigkeit im Bereich der Verbindung zwischen den einzelnen Rotorblattelementen hat es sich als besonders günstig erwiesen, wenn sich der Umfang mindestens eines Rotorblattelementes in einer senkrecht zur Längsachse verlaufenden Schnittebene zur Bildung der Ausnehmung in Richtung auf die Trennfuge vorzugsweise keilförmig verjüngt. Diese auch als Schäftung bezeichnete keilförmige Verjüngung der Rotorblattelemente erlaubt einen besonders weichen Übergang im Bereich der Trennfuge zwischen den Rotorblattelementen, welche zur Vermeidung übermäßiger Spannungsspitzen beiträgt.

Bei dem erfindungsgemäßen Rotorblatt werden die Kräfte und Momente im Bereich der Trennfuge über Schub in den Klebeflächen übertragen, so daß durch Wahl eines geeigneten Klebeverfahrens eine dauerhafte feste Verbindung erreicht werden kann. Zum Erhalt einer möglichst großflächigen Verbindung zwischen den Rotorblattelementen und den Verbindungselementen weisen die Verbindungselemente zweckmäßigerweise eine komplementär zu dem Profil der Ausnehmung verlaufende innere Begrenzungsfläche auf, wobei zwischen der Begrenzungsfläche der Ausnehmung und der inneren Begrenzungsfläche des Verbindungselements ein von einem Klebstoff gefüllter Spalt freigelassen sein kann. Ein erfindungsgemäßes Rotorblatt kann ohne Beeinflussung der aerodynamischen Eigenschaften im Bereich der Trennfuge ausgeführt werden, wenn das Verbindungselement eine mit den daran angrenzenden Bereichen der Außenflächen der Rotorblattelemente fluchtende Außenfläche aufweist.

Wie vorstehend bereits ausgeführt, kann ein erfindungsgemäßes Rotorblattelement als Hohlkörper mit einer mindestens einen Biegemomente aufnehmenden Holm aufnehmenden Schale ausgeführt sein. Bei derartigen Rotorblattelementen ist die Schale zweckmäßigerweise aus faserverstärkten Kunststoffen gebildet. Die Biegekräfte werden dabei mit dem in die Schalen integrierten Holm aufgenommen. Die Holme bestehen üblicherweise aus zwei in die Schalenhälften integrierten Gurten, die über einen oder mehrere Stege miteinander verbunden sind.

Wie der vorstehenden Erläuterung erfindungsgemäßer Rotorblätter zu entnehmen ist, ist eine erfindungsgemäße Windenergieanlage mit einem mindestens ein Rotorblatt aufweisenden und um eine etwa horizontal verlaufende Rotorachse drehbar gelagerten Rotor, bei der mindestens ein Rotorblatt mindestens zwei in Längsrichtung des Rotorblattes hintereinander angeordnete und miteinander verbundene Rotorblattelemente aufweist, im wesentlichen dadurch gekennzeichnet, daß mindestens zwei der Rotorblattelemente miteinander verklebt sind, wobei die Klebeverbindung durch Fluten eines zwischen einem Verbindungselement und den Rotorblattelementen gebildeten Hohlraums verwirklicht wird.

Wie vorstehend bereits erläutert, können zur Herstellung erfindungsgemäßer Rotorblätter geeignete Rotorblattelemente in derselben Form hergestellt werden, wie die üblichen einstückigen Rotorblätter, wenn in diese Form an der gewünschten Trennstelle ein Formteil und ggf. zur Bildung des Hohlraums eine Trennfolie eingelegt wird. Auch das Verbindungselement kann in derselben Form hergestellt werden wie die Rotorblattelemente, wenn das Formteil aus dieser Form wieder entfernt und ein komplementär dazu ausgeführtes Füllteil eingelegt wird, so daß ein Verbindungselement mit einer dem Formteil entsprechenden Form hergestellt werden kann.

Ein erfindungsgemäß hergestelltes Rotorblatt kann an der Verbindungsstelle auch wieder getrennt werden. Es wird einfach durch einen Schnitt senkrecht zur Längsachse des Rotorblattes zersägt. Anschließend müssen dann durch Schleifen oder Fräsen nur die Schäftflächen wieder hergestellt werden. Dann kann das Rotorblatt mit dem vorstehend beschriebenen Verfahren wieder an der Baustelle zusammengesetzt und verbunden werden.

Im Rahmen der Erfindung wird zur Herstellung einer Verbindung zwischen den Rotorblattelementen auf den Einsatz mechanischer Verbindungselemente verzichtet. Damit ist die erfindungsgemäß vorgeschlagene Verbindung faserverbundgerecht und daher sehr leicht. Einzige Zusatzmasse im Vergleich zu einstückig hergestellten Rotorblättern ist die Klebstoffmasse. Die Verbindung kann über vorgefertigte Teile erfolgen, die alle Strukturelemente des ungeteilten Rotorblattes enthalten und fertig ausgehärtet nur noch mit Klebstoff mit definierter Dicke mit den Flächen des Rotorblattes verbunden werden müssen.

Nachstehend wird die Erfindung unter Bezugnahme auf die Zeichnung, auf die hinsichtlich aller erfindungswesentlichen und in der Beschreibung nicht näher herausgestellten Einzelheiten verwiesen wird, erläutert. In der Zeichnung zeigt:

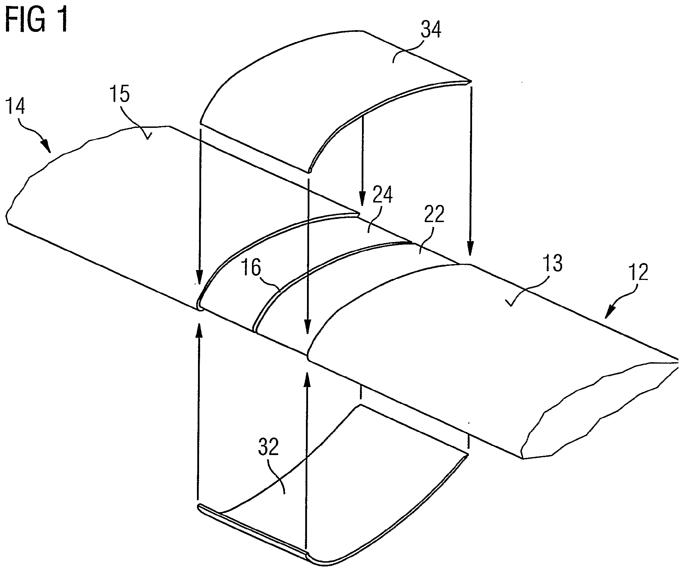

- **Fig. 1**: eine explosionsartige Darstellung eines Rotorblattes gemäß einer ersten Ausführungsform der Erfindung,
- **Fig. 2**: eine perspektivische Darstellung eines radial innenliegend anzuordnenden Rotorblattelementes eines Rotorblattes gemäß einer zweiten Ausführungsform der Erfindung,
- **Fig. 3**: eine perspektivische Darstellung eines radial außenliegend anzuordnenden Rotorblattelementes eines Rotorblattes gemäß der zweiten Ausführungsform der Erfindung,
- **Fig. 4**: ein zum Verbinden der in den Figuren 2 und 3 dargestellten Rotorblattelemente dienendes oberes Verbindungselement und
- **Fig. 5**: ein zum Verbinden der in den Figuren 2 und 3 dargestellten Rotorblattelemente dienendes unteres Verbindungselement.

Das in der Zeichnung dargestellte Rotorblatt umfaßt zwei in Längsrichtung hintereinander angeordnete Rotorblattelemente 12 und 14 sowie zwei eine Trennfuge 16 zwischen den Rotorblattelementen überbrückende Verbindungselemente 32 und 34. In montiertem Zustand sind die Verbindungselemente in Ausnehmungen 22 und 24 der Rotorblattelemente 12 und 14 angeordnet, welche durch eine Verjüngung der der Trennfuge zugewandten Enden der Rotorblattelemente 12 und 14 gebildet sind. Die Ausnehmungen 22 und 24 sind bei der in der Zeichnung dargestellten Ausführungsform so ausgeführt, daß sie die Längsachse des Rotorblattes vollständig umlaufen. Die Abmessungen der Verbindungselemente 32 und 34 sind so auf diejenigen der Ausnehmungen 22 und 24 abgestimmt, daß die Verbindungselemente 32 und 34 bei fluchtender Ausrichtung mit den äußeren Begrenzungsflächen 13 und 15 der Rotorblattelemente noch einen Hohlraum zwischen die die Ausnehmungen 22 und 24 bildenden Begrenzungsflächen der Rotorblattelemente 12 und 14 und den inneren Begrenzungsflächen der Verbindungselemente 32 und 34 frei lassen.

Zur Montage des in der Zeichnung dargestellten Rotorblattes werden die Rotorblattelemente 12 und 14 sowie die Verbindungselemente 32 und 34 zunächst in die gewünschte fluchtende Ausrichtung überführt. Dann wird der zwischen den äußeren Begrenzungsflächen der Ausnehmungen 22 und 24 und den inneren Begrenzungsflächen der Verbindungselemente 32 und 34 gebildete Hohlraum mit einem Klebstoff geflutet, der anschließend ausgehärtet wird.

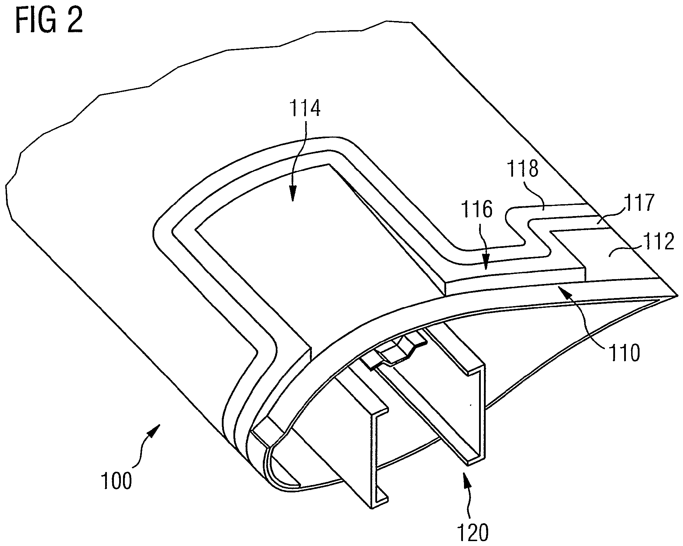

Das in Fig. 2 dargestellte Rotorblattelement 100 ist in Form eines Hohlkörpers mit einer aus einem Faserverbundwerkstoff gebildeten Schale 110 und einem zur Aufnahme von Biegemomenten dienenden Holm 120 im Innenraum der Schale 110 ausgeführt. Die Schale 110 des im montierten Zustand radial innenliegend angeordneten Rotorblattelementes weist an ihrem radial äußeren Endbereich zwei Fixierungssegmente 112 und 114 auf. Im Bereich dieser Fixierungssegmente 112 und 114 ist das Rotorblattelement 100 geschäftet, so daß sich der Querschnitt des Rotorblattelementes in einer senkrecht zur Längsrichtung verlaufenden Schnittebene im Bereich der Fixierungssegmente 112 und 114 keilförmig verjüngt. Wie der Fig. 2 deutlich zu entnehmen ist, erstreckt sich das Fixierungssegment 112 in Längsrichtung des Rotorblattelementes 100 längs des der angeströmten Nase des Rotorblattelementes 100 abgewandten hinteren Randes des Rotorblattelementes 100, während sich das Fixierungssegment 114 im Bereich des Holms 120 in Längrichtung des Rotorblattelementes erstreckt.

Die Fixierungssegmente 112 und 114 werden von einem Arretierungsrand 116 umlaufen, der zwei Arretierungssegmente 117 und 118 aufweist. Im Bereich des äußeren Arretierungssegmentes 118 ist nur die äußere Schicht des Faserverbundwerkstoffes entfernt, während im Bereich des inneren Arretierungssegmentes 117 zwei äußere Schichten des die Schale 110 bildenden Faserverbundwerkstoffes entfernt sind. In Fig. 2 ist nur die obere Begrenzungsfläche der Schale 110 des Rotorblattelementes 100 dargestellt. Die untere Begrenzungsfläche ist ähnlich ausgeführt mit zwei Fixierungssegmenten, welche von einem Arretierungsrand mit zwei Arretierungssegmenten umlaufen werden.

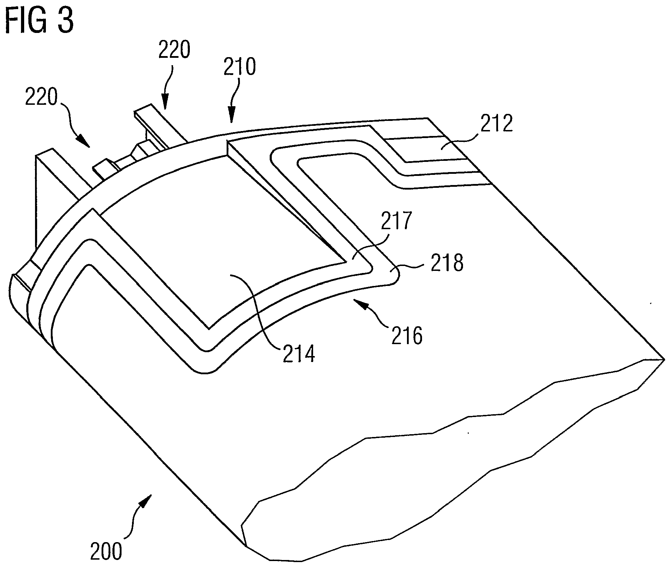

In Fig. 3 ist ein im montierten Zustand an das in Fig. 2 dargestellte Rotorblattelement 100 angrenzendes radial außen anzuordnendes Rotorblattelement 200 dargestellt. An seinem dem in Fig. 2 dargestellten Rotorblattelement 100 zugewandten radial innenliegenden Endbereich weist das Rotorblattelement 200 ebenso wie das Rotorblattelement 100 zwei geschäftete Fixierungssegmente 212 und 214 auf, wobei sich das Fixierungssegment 212 ebenso wie das Fixierungssegment 112 des Rotorblattelementes 100 in Längsrichtung des Rotorblattelementes 200 längs des der angeströmten Nase des Rotorblattelementes 200 abgewandten Randes des Rotorblattelementes 200 erstreckt, während sich das Fixierungssegment 214 im Bereich des im Innenraum der Schale 210 angeordneten Holms 220 in Längsrichtung des Rotorblattelementes 200 erstreckt. Die Fixierungssegmente 212 und 214 werden ebenfalls von einem zwei Arretierungssegmente 217 und 218 aufweisenden Arretierungsrand 216 umlaufen.

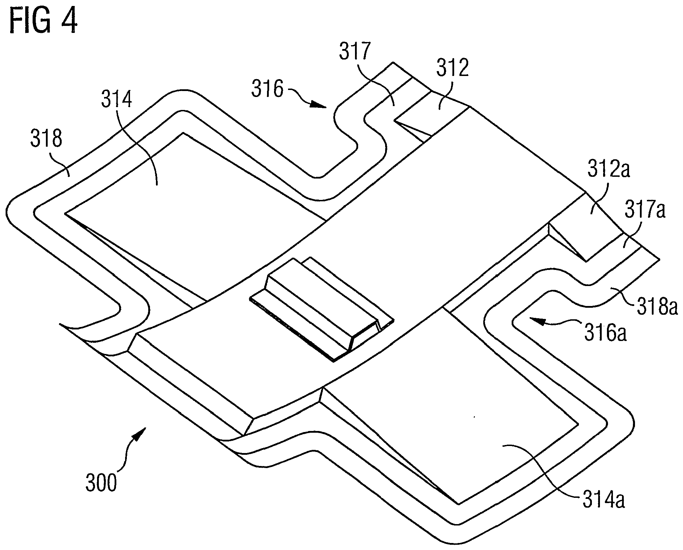

In Fig. 4 ist ein zum Verbinden der Rotorblattelemente 100 und 200 dienendes, eine Trennfuge zwischen diesen Rotorblattelementen überbrückendes Verbindungselement 300 dargestellt. Das Verbindungselement 300 umfaßt insgesamt vier Fixierungssegmente 312, 312a, 314 und 314a, von denen die Fixierungssegmente 312 und 314 komplementär zu den Fixierungssegmenten 212 und 214 ausgeführt sind, während die Fixierungssegmente 312a und 314a komplementär zu den Fixierungssegmenten 112 und 114 ausgeführt sind. Das heißt, daß die Fixierungssegmente des Verbindungselementes 300 sich ausgehend von der zwischen den Rotorblattelementen 100 und 200 gebildeten Trennfuge keilförmig verjüngen. Die Fixierungssegmente 312 und 314 des Verbindungselementes 300 werden von einem zwei Arretierungssegmente 317 und 318 aufweisenden Arretierungsrand 316 umlaufen. Ebenso werden die Fixierungssegmente 312a und 314a von einem zwei Arretierungssegmente 317a und 318a aufweisenden Arretierungsrand 316a umlaufen.

Die äußeren Arretierungssegmente 318 und 318a sind durch einen dem Werkstoff der äußeren Schicht der Schalen 110 bzw. 210 entsprechenden Werkstoff gebildet, während die inneren Arretierungssegmente 317 und 317a einen Aufbau aufweisen, welcher dem Aufbau der äußeren beiden Schichten der Schale 110 bzw. 210 entspricht. Auf diese Weise wird erreicht, daß das Verbindungselement 300 einen dem Aufbau daran angrenzender Bereiche der Rotorblattelemente 100 und 200 entsprechenden laminatförmigen Aufbau aufweist, wobei durch die Anpassung der Arretierungsränder und Fixierungssegmente des Verbindungselementes 300 an die Struktur der Fixierungssegmente und Arretierungsränder der Rotorblattelemente 100 und 200 ein insgesamt homogener Blattaufbau ohne Steifigkeitssprünge erreicht wird. Dadurch wird die Ausbildung von Spannungsspitzen im Bereich der Trennfuge zwischen den Rotorblattelementen 100 und 200 verhindert. Eine weitere Reduzierung der Belastungen des Rotorblattes im Bereich der Trennfuge wird dadurch erreicht, daß die Übergänge zwischen den geradlinig verlaufenden Kanten des Verbindungselementes abgerundet sind, so daß auch hier keine sprunghaften Veränderungen der Blattstruktur auftreten.

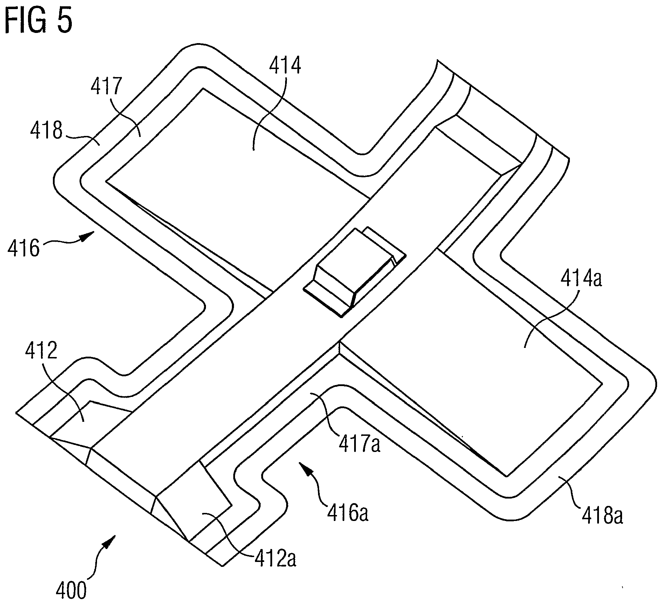

Das in Fig. 5 dargestellte untere Verbindungselement 400 weist ebenso wie das in Fig. 4 dargestellte obere Verbindungselement 300 insgesamt vier Fixierungssegmente 412, 412a, 414 und 414a auf, von denen sich jedes ausgehend von der Trennfuge keilförmig verjüngt. Die Fixierungssegmente 412 und 414 werden von einem zwei Arretierungssegmente 417 und 418 aufweisenden Arretierungsrand umlaufen. Ebenso werden die Fixierungssegmente 412a und 414a von einem zwei Arretierungssegmente 417a und 418a aufweisenden Arretierungsrand 416a umlaufen.

Zur Montage der in den Figuren 2 - 5 dargestellten Bauelemente werden zunächst die Rotorblattelemente 100 und 200 in Längsrichtung hintereinander angeordnet und ausgerichtet. Danach werden die Verbindungselemente 300 und 400 im Bereich ihrer Arretierungsränder 316 und 316a bzw. 416 und 416a an entsprechenden Arretierungsrändern der Rotorblattelemente mit Hilfe eines Dickharzes befestigt. Die Abmessungen der Fixierungssegmente der Verbindungselemente 300 und 400 sind derart auf die Abmessungen der Fixierungssegmente der Rotorblattelemente 100 und 200 abgestimmt, daß nach Befestigung der Verbindungselemente 300 und 400 im Bereich der Arretierungsränder noch Hohlräume zwischen den Fixierungssegmenten der Rotorblattelemente 100 und 200 und den Fixierungssegmenten der Verbindungselemente 300 und 400 verbleibt. Zur Stabilisierung dieser Hohlräume können bei der Montage entsprechende Abstandhalter in die Hohlräume eingelegt werden. Die Hohlräume werden nach Aushärtung des zum Verkleben der Verbindungselemente 300 und 400 mit den Rotorblattelementen 100 und 200 im Bereich der Arretierungsränder benutzten Dickharzes mit einem Klebstoff geflutet, wobei der Klebstoff mit Überdruck in die gebildeten Hohlräume eingeleitet wird, in welchen zuvor ein Unterdruck erzeugt worden ist.

Zum Erhalt eines das Einleiten des Klebstoffs in den zwischen den Fixierungssegmenten gebildeten Hohlraum ermöglichenden Kanals wird beim Befestigen der Verbindungselemente im Bereich der Arretierungsränder ein Gummistreifen in den Bereich der Arretierungsränder eingelegt, welcher zur Bildung des Kanals entfernt werden kann. Durch die vorstehend erläuterte Montage wird eine feste Verbindung zwischen den Rotorblattelementen 100 und 200 ohne sprunghafte Änderung der Rotorblattstruktur im Bereich der Trennfuge zwischen den Rotorblattelementen erreicht. Dabei wird durch die Anordnung der Fixierungssegmente im Bereich der Holme 120 und 220 einerseits und der der angeströmten Nase abgewandten Ränder der Rotorblattelemente eine besonders feste Verbindung in den während des Betriebs einer Windenergieanlage besonders belasteten Bereichen erreicht.

Die Erfindung ist nicht auf die anhand der Zeichnung erläuterte Ausführungsform beschränkt. Vielmehr ist auch an den Einsatz von Rotorblattelementen gedacht, bei denen die Ausnehmungen an den der Trennfuge 16 zugewandten Enden der Rotorblattelemente in anderer Form geschäftet sind. Ferner ist auch an den Einsatz von Rotorblättern mit mehr als zwei Rotorblattelementen gedacht. Die Verbindungselemente können dabei im wesentlichen beliebige Formen aufweisen. Insbesondere ist es nicht erforderlich, daß die Verbindungselemente die Längsachse des Rotorblattes vollständig umlaufen.

## Patentansprüche

1. Verfahren zum Herstellen eines Rotorblattes für eine Windenergieanlage, bei dem mindestens zwei Rotorblattelemente (12, 14; 100, 200) in Längsrichtung des Rotorblattes hintereinander angeordnet und über mindestens ein, vorzugsweise mindestens zwei, eine Trennfuge (16) zwischen den Rotorblattelementen (12, 14; 100, 200) überbrückende Verbindungselemente (32, 34; 300, 400) miteinander verklebt werden, **dadurch gekennzeichnet, daß** mindestens ein Verbindungselement (32, 34; 300, 400) unter Bildung eines Hohlraums zwischen einer äußeren Begrenzungsfläche (13, 15) mindestens eines der Rotorblattelemente (12, 14; 100, 200) und zumindest einem Fixierungssegment (312, 312a, 314, 314a; 412, 412a, 414, 414a) der inneren Begrenzungsfläche dieses Verbindungselementes (32, 34; 300, 400) mit den Rotorblattelementen (12, 14; 100, 200) ausgerichtet und dann der Hohlraum mit einem Klebstoff, insbesondere mit einem Harz, geflutet wird.

2. Verfahren nach Anspruch 1, **dadurch gekennzeichnet, daß** die Ausrichtung des Verbindungselementes (32, 34; 300, 400) vor Fluten des Hohlraums durch Verkleben eines das Fixierungssegment (312, 312a, 314, 314a; 412, 412a, 414, 414a) zumindest teilweise umlaufenden Arretierungsrandes (316, 316a, 318, 318a; 416, 416a, 418, 418a) der inneren Begrenzungsfläche des Verbindungselementes (32, 34; 300, 400) mit einer äußeren Begrenzungsfläche (13, 15) mindestens eines der Rotorblattelemente (12, 14; 100, 200) arretiert wird.

3. Verfahren nach Anspruch 2, **dadurch gekennzeichnet, daß** der Hohlraum zumindest im Bereich des Arretierungsrandes (316, 316a, 318, 318a; 416, 416a, 418, 418a) dicht verschlossen wird.

4. Verfahren nach Anspruch 2 oder 3, **dadurch gekennzeichnet, daß** das Verbindungselement (32, 34; 300, 400) im Bereich des Arretierungsrandes (316, 316a, 318, 318a; 416, 416a, 418, 418a) mit einem eingedickten Epoxidharz und/oder Polyesterharz mit mindestens einem der Rotorblattelemente (12, 14; 100, 200) verklebt wird.

5. Verfahren nach einem der vorhergehenden Ansprüche, **dadurch gekennzeichnet, daß** zum Fluten ein Unterdruck in dem Hohlraum erzeugt wird und/oder der Klebstoff (Harz) mit Überdruck in den Hohlraum gepumpt wird.

6. Verfahren nach einem der vorhergehenden Ansprüche, **dadurch gekennzeichnet, daß** der Hohlraum mit einem Klebstoff mit einer dynamischen Viskosität η im Bereich von etwa 130-230, vorzugsweise etwa 150-210, besonders bevorzugt etwa 170-190, insbesondere etwa 180 Mpas und/oder einer kinematischen Viskosität v = η/ρr im Bereich von etwa 1,2-2 × 10⁵ m²/s, vorzugsweise 1,4-1,8 × 105 10⁵ m²/s, insbesondere etwa 1,6 × 10⁵ m²/s geflutet wird.

7. Verfahren nach einem der vorhergehenden Ansprüche, **dadurch gekennzeichnet, daß** der Hohlraum mit flüssigem Epoxidharz und/oder Polyesterharz geflutet wird.

8. Verfahren nach einem der vorhergehenden Ansprüche, **dadurch gekennzeichnet, daß** der Klebstoff nach dem Fluten bei Raumtemperatur und/oder für einen Zeitraum von 6 bis 10 Stunden bei einer Temperatur von etwa 70 °C aushärtet.

9. Verfahren nach einem der vorhergehenden Ansprüche, **dadurch gekennzeichnet, daß** die Zufuhr des Harzes an der ausgehend von der äußeren Begrenzungsfläche (13, 15) des Rotorblattes betrachtet tiefsten Stelle des Hohlraums erfolgt und/oder der Unterdruck an der höchstgelegenen Stelle erzeugt wird.

10. Verfahren nach einem der vorhergehenden Ansprüche, **dadurch gekennzeichnet, daß** die Rotorblattelemente (12, 14; 100, 200) in derselben Form hergestellt werden, in die an der gewünschten Trennstelle ein Formteil und ggf. zur Bildung des Hohlraums eine Trennfolie eingelegt ist.

11. Verfahren nach Anspruch 10, **dadurch gekennzeichnet, daß** mindestens ein Verbindungselement in derselben Form hergestellt wird wie die Rotorblattelemente(12, 14; 100, 200).

12. Rotorblatt für den Rotor einer Windenergieanlage, hergestellt mit einem Verfahren nach einem der vorhergehenden Ansprüche, mit mindestens zwei in Längsrichtung des Rotorblattes hintereinander angeordneten und miteinander verklebten Rotorblattelementen (12, 14; 100, 200), mit mindestens einem, vorzugsweise mindestens zwei eine Trennfuge (16) zwischen den Rotorblattelementen (12, 14; 100, 200) überbrückenden Verbindungselement (32, 34; 300, 400) mit mindestens zwei Klebeflächensegmenten, von denen jedes mit einem der Rotorblattelemente (12, 14; 100, 200) großflächig verklebt ist.

13. Rotorblatt nach Anspruch 12, **dadurch gekennzeichnet, daß** das Verbindungselement (32, 34; 300, 400) zumindest teilweise in einer von den äußeren Begrenzungsflächen (13, 15) der Rotorblattelemente (12, 14; 100, 200) im Bereich der Trennfuge (16) gebildeten Ausnehmung aufgenommen ist.

14. Rotorblatt nach Anspruch 13, **dadurch gekennzeichnet, daß** die Ausnehmung die Längsachse des Rotorblattes zumindest teilweise umläuft.

15. Rotorblatt nach Anspruch 13 oder 14, **dadurch gekennzeichnet, daß** sich der Außenumfang mindestens eines Rotorblattelementes (12, 14; 100, 200) in einer senkrecht zur Längsachse verlaufenden Schnittebene zur Bildung der Ausnehmung in Richtung auf die Trennfuge (16) vorzugsweise keilförmig verjüngt.

16. Rotorblatt nach einem der Ansprüche 13 bis 15, **dadurch gekennzeichnet, daß** das Verbindungselement (32, 34; 300, 400) eine komplementär zu dem Profil der Ausnehmung (22, 24) verlaufende innere Begrenzungsfläche aufweist.

17. Rotorblatt nach einem der Ansprüche 13 bis 16, **dadurch gekennzeichnet, daß** das Verbindungselement (32, 34; 300, 400) eine mit den daran angrenzenden Bereichen der Außenflächen (13, 15) der Rotorblattelemente (12, 14; 100, 200) fluchtende Außenfläche aufweist.

18. Rotorblatt nach einem der Ansprüche 1 bis 17, **dadurch gekennzeichnet, daß** mindestens ein Verbindungselement (32, 34; 300, 400) einen dem Aufbau daran angrenzender Bereiche der Rotorblattelemente (12, 14; 100, 200) entsprechenden, vorzugsweise laminatförmigen Aufbau aufweist.

19. Rotorblatt nach einem der vorhergehenden Ansprüche, **dadurch gekennzeichnet, daß** mindestens ein Rotorblattelement (12, 14; 100, 200) als Hohlkörper mit einer mindestens einen Biegekräfte aufnehmenden Holm (120, 220) aufnehmenden Schale (110, 210) ausgeführt ist.

20. Windenergieanlage nach einem der Ansprüche 12 bis 19 mit einem mindestens ein Rotorblatt aufweisenden und um eine etwa horizontal verlaufende Rotorachse drehbar gelagerten Rotor.

21. System zur Verbindung von Rotorblattelementen (12, 14; 100, 200) für ein Rotorblatt einer Windkraftanlage, aufweisend Rotorblattelemente (12, 14; 100, 200) und ein Verbindungselement (32, 34; 300, 400) mit
mindestens zwei Fixierungssegmenten (312, 312a, 314, 314a; 412, 412a, 414, 414a), und die Fixierungssegmente (312, 312a, 314, 314a; 412, 412a, 414, 414a) umlaufenden Arretierungssegmenten (317, 317a; 318, 318a),
wobei das Verbindungselement (32, 34; 300, 400) eine in Richtung der Längsachse der zu verbindenden Rotorblattelemente (12, 14; 100, 200) nach außen gerichtete Verjüngung aufweist, und
wobei die Verjüngung in derart gebildet sind, dass das Verbindungselement (32, 34; 300, 400) mit den zu verbindenden Rotorblattelementen (12, 14; 100, 200) einen Hohlraum bilden kann.

## Claims

1. A process for producing a rotor blade for a wind power plant having at least two rotor blade elements (12, 14; 100, 200) arranged one behind another in longitudinal direction of the rotor blade and bonded to each other by at least one, preferably at least two, connecting elements (32, 34; 300, 400) which bridge a separation gap (16) between the rotor blade elements (12, 14; 100, 200), **characterized in that** at least one connecting element (32, 34; 300, 400) is aligned with the rotor blade elements (12, 14; 100, 200) by forming a hollow space between an outer delimitation surface (13, 15) of at least one of the rotor blade elements (12, 14; 100, 200) and at least one fixing segment (312, 312a, 314, 314a; 412, 412a, 414, 414a) of the inner delimitation surface of this connecting element (32, 34; 300, 400) and then the hollow space is flooded with an adhesive, in particular with a resin.

2. The process according to claim 1, **characterized in that** the alignment of the connecting element (32, 34; 300, 400) is carried out before flooding the hollow space by gluing a locking rim (316, 316a, 318, 318a) at least partially surrounding the fixing segment (312, 312a, 314, 314a; 412, 412a, 414, 414a); 416, 416a, 418, 418a) of the inner delimitation surface of the connecting element (32, 34; 300, 400) with an outer delimitation surface (13, 15) of at least one of the rotor blade elements (12, 14; 100, 200).

3. The process according to claim 2, **characterized in that** the hollow space is sealed tightly at least in the region of the locking rim (316, 316a, 318, 318a; 416, 416a, 418, 418a).

4. The process according to claim 2 or 3, **characterized in that** the connecting element (32, 34; 300, 400) is glued to at least one of the rotor blade elements (12, 14; 100, 200) in the area of the locking rim (316, 316a, 318, 318a; 416, 416a, 418, 418a) with a thickened epoxy resin and/or polyester resin.

5. The process according to one of the preceding claims, **characterized in that**, for flooding, a negative pressure is generated in the hollow space and/or the adhesive (resin) is pumped into the hollow space with overpressure.

6. The process according to one of the preceding claims, **characterized in that** the hollow space is flooded with an adhesive having a dynamic viscosity η in the range of about 130-230, preferably about 150-210, more preferably about 170-190, in particular about 180 Mpas and/or a kinematic viscosity v = η/ρr in the range of about 1,2-2 × 10⁵ m²/s, preferably 1,4-1,8 × 10⁵ m²/s, in particular about 1,6 × 10⁵ m²/s.

7. The process according to one of the preceding claims, **characterized in that** the hollow space is flooded with liquid epoxy resin and/or polyester resin.

8. The process according to one of the preceding claims, **characterized in that** the adhesive cures after flooding at room temperature and/or for a period of 6 to 10 hours at a temperature of about 70°C.

9. The process according to one of the preceding claims, **characterized in that** the resin is effected at the lowest point of the hollow space, as seen from the outer delimitation surface (13, 15) of the rotor blade, and/or the negative pressure is generated at the highest point.

10. The process according to one of the preceding claims, **characterized in that** the rotor blade elements (12, 14; 100, 200) are produced in the same mould, in which, at the desired location of separation, a forming part and, optionally, a separating film is inserted to form the hollow space.

11. Process according to claim 10, **characterized in that** at least one connecting element is produced in the same shape as the rotor blade elements (12, 14; 100, 200).

12. A rotor blade for the rotor of a wind power plant, produced by a process according to one of the preceding claims, having at least two rotor blade elements (12, 14; 100, 200) which are arranged one behind the other in the longitudinal direction of the rotor blade and are glued together, comprising at least one, preferably at least two, connecting element (32, 34; 300, 400) bridging a separation line (16) between the rotor blade elements (12, 14; 100, 200) and having at least two adherend surface segments, each of which is glued together with one of the rotor blade elements (12, 14; 100, 200) over a large surface.

13. The rotor blade according to claim 12, **characterized in that** the connecting element (32, 34; 300, 400) is at least partially accommodated in a recess formed by the outer delimitation surfaces (13, 15) of the rotor blade elements (12, 14; 100, 200) in the region of the separation line (16).

14. The rotor blade according to claim 13, **characterized in that** the recess at least partially surrounds the longitudinal axis of the rotor blade.

15. The rotor blade according to claim 13 or 14, **characterized in that** the outer circumference of at least one rotor blade element (12, 14; 100, 200) tapers towards the separation line preferably in a wedge-shaped manner in a cutting plane extending perpendicularly to the longitudinal axis for forming the recess.

16. The rotor blade according to one of claims 13 to 15, **characterized in that** the connecting element (32, 34; 300, 400) has an inner delimitation surface extending in a complementary manner to the profile of the recess (22, 24).

17. The rotor blade according to one of claims 13 to 16, **characterized in that** the connecting element (32, 34; 300, 400) has an outer surface aligned with the adjacent regions of the outer surfaces (13, 15) of the rotor blade elements (12, 14; 100, 200).

18. The rotor blade according to one of claims 1 to 17, **characterized in that** at least one connecting element (32, 34; 300, 400) has a preferably laminate structure corresponding to the structure of adjacent regions of the rotor blade elements (12, 14; 100, 200).

19. Rotor blade according to one of the preceding claims, **characterized in that** at least one rotor blade element (12, 14; 100, 200) is embodied as a hollow body with a shell (110, 210) receiving at least one spar (120, 220) absorbing bending forces.

20. A wind power plant according to one of the claims 12 to 19 with a rotor having a rotor having at least one rotor blade and being pivoted about a rotor axis extending approximately horizontally.

21. System for connecting rotor blade elements (12, 14; 100, 200) for a rotor blade of a wind power plant, comprising rotor blade elements (12, 14; 100, 200) and a connecting element (32, 34; 300, 400) having
at least two fixation segments (312, 312a, 314, 314a; 412, 412a, 414, 414a), and
the fixation segments (312, 312a, 314, 314a; 412, 412a, 414, 414a) are circumferential locking rims (317, 317a; 318, 318a),
wherein the connecting element (32, 34; 300, 400) having a taper directed outwardly in the direction of the longitudinal axis of the rotor blade elements (12, 14; 100, 200) to be connected, and
wherein the taper is formed such that the connecting member (32, 34; 300, 400) can form a cavity with the rotor blade members (12, 14; 100, 200) to be connected.

## Revendications

1. Procédé de fabrication d'une pale de rotor pour une éolienne, dans lequel au moins deux éléments de pale de rotor (12, 14 ; 100, 200) sont disposés les uns derrière les autres en direction longitudinale de la pale de rotor et collés les uns aux autres moyennant au moins un, de préférence au moins deux éléments de liaison (32, 34 ; 300, 400) comblant une jointure (16) entre les éléments de pale de rotor (12, 14 ; 100, 200), **caractérisé en ce qu'**au moins un élément de liaison (32, 34 ; 300, 400) est aligné avec les éléments de pale de rotor (12, 14 ; 100, 200) en formant une cavité entre une face de délimitation extérieure (13, 15) d'au moins un des éléments de pale de rotor (12, 14 ; 100, 200) et au moins un segment de fixation (312, 312a, 314, 314a ; 412, 412a, 414, 414a) de la face de délimitation intérieure de cet élément de liaison (32, 34 ; 300, 400) et **en ce que** la cavité est ensuite inondée avec une colle, en particulier une résine.

2. Procédé selon la revendication 1, **caractérisé en ce que** l'alignement de l'élément de liaison (32, 34 ; 300, 400) est arrêté avant inondation de la cavité par collage d'un bord d'arrêt (316, 316a, 318, 318a ; 416, 416a, 418, 418a) de la face de délimitation intérieure de l'élément de liaison (32, 34 ; 300, 400) entourant au moins en partie le segment de fixation (312, 312a, 314, 314a ; 412, 412a, 414, 414a) avec une face de délimitation extérieure (13, 15) d'au moins un des éléments de pale de rotor (12, 14 ; 100, 200).

3. Procédé selon la revendication 2, **caractérisé en ce que** la cavité est obturée de manière étanche au moins dans la zone du bord d'arrêt (316, 316a, 318, 318a ; 416, 416a, 418, 418a).

4. Procédé selon la revendication 2 ou 3, **caractérisé en ce que** l'élément de liaison (32, 34 ; 300, 400) est collé à au moins un des éléments de pale de rotor (12, 14 ; 100, 200) au moyen d'une résine d'époxy et/ou résine de polyester épaissie dans la zone du bord d'arrêt (316, 316a, 318, 318a ; 416, 416a, 418, 418a).

5. Procédé selon l'une des revendications précédentes, **caractérisé en ce que**, pour l'inondation, une dépression est générée dans la cavité et/ou la colle (résine) est pompée dans la cavité avec surpression.

6. Procédé selon l'une des revendications précédentes, **caractérisé en ce que** la cavité est inondée avec une colle d'une viscosité dynamique η comprise dans la plage d'environ 130-230, de préférence d'environ 150-210, de manière plus préférentielle d'environ 170-190, en particulier d'environ 180 Mpas et/ou d'une viscosité cinématique v = η/ρr comprise dans la plage d'environ 1,2-2 x 10⁵ m²/s, de préférence 1,4-1,8 x 10⁵ m²/s, en particulier d'environ 1,6 x 10⁵ m²/s.

7. Procédé selon l'une des revendications précédentes, **caractérisé en ce que** la cavité est inondée avec de la résine d'époxy et/ou résine de polyester liquide.

8. Procédé selon l'une des revendications précédentes, **caractérisé en ce que**, après l'inondation, la colle durcit à température ambiante et/ou pendant une période de 6 à 10 heures à une température d'environ 70 °C.

9. Procédé selon l'une des revendications précédentes, **caractérisé en ce que** l'amenée de la résine est effectuée au point le plus bas de la cavité en le considérant depuis la face de délimitation extérieure (13, 15) de la pale de rotor et/ou la dépression est générée au point le plus haut.

10. Procédé selon l'une des revendications précédentes, **caractérisé en ce que** les éléments de pale de rotor (12, 14 ; 100, 200) sont fabriqués dans la même forme que celle dans laquelle une pièce moulée et, le cas échéant, pour la formation de la cavité, une feuille de séparation sont insérées au point de séparation souhaité.

11. Procédé selon la revendication 10, **caractérisé en ce qu'**au moins un élément de liaison est fabriqué dans la même forme que les éléments de pale de rotor (12, 14 ; 100, 200).

12. Pale de rotor pour le rotor d'une éolienne, fabriquée par un procédé selon l'une des revendications précédentes, comprenant au moins deux éléments de pale de rotor (12, 14 ; 100, 200) disposés les uns derrière les autres en direction longitudinale de la pale de rotor et des éléments de pale de rotor (12, 14 ; 100, 200) collés les uns aux autres avec au moins un, de préférence au moins deux éléments de liaison (32, 34 ; 300, 400) comblant une jointure (16) entre les éléments de pale de rotor (12, 14 ; 100, 200) et présentant au moins deux segments de face de collage dont chacun est collé sur une large surface à un des éléments de pale de rotor (12, 14 ; 100, 200).

13. Pale de rotor selon la revendication 12, **caractérisé en ce que** l'élément de liaison (32, 34 ; 300, 400) est logé au moins en partie dans un évidement formé dans la zone de la jointure (16) par les faces de délimitation extérieures (13, 15) des éléments de pale de rotor (12, 14 ; 100, 200).

14. Pale de rotor selon la revendication 13, **caractérisé en ce que** l'évidement entoure en moins en partie l'axe longitudinal de la pale de rotor.

15. Pale de rotor selon la revendication 13 ou 14, **caractérisé en ce que** le pourtour extérieur d'au moins un élément de pale de rotor (12, 14 ; 100, 200) s'amincit de préférence en forme de coin en direction de la jointure (16) dans un plan de coupe perpendiculaire à l'axe longitudinal pour former l'évidement.

16. Pale de rotor selon l'une des revendications 13 à 15, **caractérisée en ce que** l'élément de liaison (32, 34 ; 300, 400) présente une face de délimitation intérieure au tracé complémentaire au profil de l'évidement (22, 24).

17. Pale de rotor selon l'une des revendications 13 à 16, **caractérisée en ce que** l'élément de liaison (32, 34 ; 300, 400) présente une face extérieure qui est de niveau avec les zones qui y sont contiguës des faces extérieures (13, 15) des éléments de pale de rotor (12, 14 ; 100, 200).

18. Pale de rotor selon l'une des revendications 1 à 17, **caractérisée en ce qu'**au moins un élément de liaison (32, 34 ; 300, 400) présente une structure correspondant à la structure de zones qui y sont contiguës des éléments de pale de rotor (12, 14 ; 100, 200), de préférence en forme de stratifié.

19. Pale de rotor selon l'une des revendications précédentes, **caractérisée en ce qu'**au moins un élément de pale de rotor (12, 14 ; 100, 200) est exécuté comme corps creux avec une coque (110, 210) logeant au moins un longeron (120, 220) reprenant les forces de cintrage.

20. Éolienne selon l'une des revendications 12 à 19 avec un rotor présentant au moins une pale de rotor et logé de manière rotative autour d'un axe de rotor sensiblement horizontal.

21. Système de liaison d'éléments de pale de rotor (12, 14 ; 100, 200) pour une pale de rotor d'une éolienne, présentant des éléments de pale de rotor (12, 14 ; 100, 200) et un élément de liaison (32, 34 ; 300, 400) avec
au moins deux segments de fixation (312, 312a, 314, 314a ; 412, 412a, 414, 414a), et
les segments d'arrêt (317, 317a ; 318, 318a) entourant les segments de fixation (312, 312a, 314, 314a ; 412, 412a, 414, 414a),
sachant que l'élément de liaison (32, 34 ; 300, 400) présente un amincissement dirigé vers l'extérieur en direction de l'axe longitudinal des éléments de pale de rotor (12, 14 ; 100, 200) à relier, et
sachant que l'amincissement est formé de telle façon que l'élément de liaison (32, 34 ; 300, 400) puisse former une cavité avec les éléments de pale de rotor (12, 14 ; 100, 200) à relier.
